# EUROPEAN PATENT APPLICATION

(11) **EP 2 830 315 A1**
(43) Date of publication of application: **28.01.2015**
(21) Application number: 13765272.3
(22) Date of filing: 10.01.2013
(51) Int. Cl.: H04N 13/04

(54) **IMAGE PROCESSING DEVICE, IMAGE PROCESSING METHOD, AND PROGRAM**

(30) Priority: 22.03.2012 JP 2012064894
(71) Applicant: NEC CASIO Mobile Communications, Ltd., Kawasaki-shi, Kanagawa 211-8666 (JP)
(72) Inventor: ENDO, Tsugio, Kawasaki-shi, Kanagawa 211-8666 (JP)
(74) Representative: Vossius & Partner
(86) International application number: PCT/JP2013/000045
(87) International publication number: WO 2013/140702

(57) **Abstract**

A position calculation unit (110) acquires image data generated by imaging a face of a user. The position calculation unit (110) calculates a position of the face within the image data. A three-dimensional image generation unit (130) generates three-dimensional image data for displaying a three-dimensional image, on the basis of a left-eye image, a right-eye image, and a three-dimensional image display parameter. A parameter setting unit (120) sets the parameter on the basis of a calculation value of the position calculation unit (110). The parameter is, for example, a shift amount of at least one of the left-eye image and the right-eye image.

## Description

### TECHNICAL FIELD

The present invention relates to an image processing device, an image processing method, and a program for generating three-dimensional image data for displaying a three-dimensional image.

### BACKGROUND ART

As techniques for displaying an image in three dimensions, there are techniques disclosed in, for example, Patent Documents 1 and 2. Patent Document 1 discloses the technique in which the position of a user's viewpoint is detected by processing an image, and that a three-dimensional image is rotated on the basis of the detection result.

Patent Document 2 discloses the technique in which an image display device is caused to alternatively display a left-eye image and a right-eye image, thereby allowing a user to recognize a three-dimensional image. Particularly, the technique of Patent Document 2 discloses that a light path of an image is tilted toward the left eye of a user when the image display device is caused to display the left-eye image, and that the light path of an image is tilted toward the right eye of the user when the image display device is caused to display the right-eye image.

### RELATED DOCUMENTS

### PATENT DOCUMENTS

[Patent Document 1] Japanese Unexamined Patent Publication No. 4-253281
[Patent Document 2] Japanese Unexamined Patent Publication No. 8-62534

### DISCLOSURE OF THE INVENTION

The angle of convergence and the base-line length of a left-eye image and a right-eye image are shifted in advance. The values thereof are generally fixed values. However, the angle of convergence and the base-line length that work best are different for each user. For this reason, there has been a need for users to manually set a three-dimensional image display parameter.

An object of the present invention is to provide an image processing device, an image processing method, and a program which are capable of easily setting a three-dimensional image display parameter.

According to the present invention, there is provided an image processing device including: a position calculation unit that acquires image data generated by imaging a face of a user and calculate a position of the face within the image data; a three-dimensional image generation unit that generates three-dimensional image data for displaying a three-dimensional image, on the basis of a left-eye image, a right-eye image, and a three-dimensional image display parameter; and a parameter setting unit that sets the parameter on the basis of a calculation value of the position calculation unit.

According to the present invention, there is provided an image processing method causing a computer to: acquire image data generated by imaging a face of a user and calculate a position of the face in the image data; generate three-dimensional image data for displaying a three-dimensional image, on the basis of a left-eye image, a right-eye image, and a three-dimensional image display parameter; and set the parameter on the basis of the position of the face.

According to the present invention, there is provided a program causing a computer to have: a function of acquiring image data generated by imaging a face of a user and calculate a position of the face in the image data; a function of generating three-dimensional image data for displaying a three-dimensional image, on the basis of a left-eye image, a right-eye image, and a three-dimensional image display parameter; and a function of setting the parameter on the basis of the position of the face.

According to the present invention, a three-dimensional image display parameter is easily set by a user.

### BRIEF DESCRIPTION OF THE DRAWINGS

The above-mentioned objects, other objects, features and advantages will be made clearer from the preferred embodiments described below, and the following accompanying drawings.

FIG. 1 is a diagram illustrating a functional configuration of an image processing device according to a first embodiment.
FIG. 2 is a diagram illustrating a functional configuration of an image processing device according to a second embodiment.
FIG. 3 is a plan view illustrating a layout of an imaging unit and a display unit in the image processing device.
FIG. 4 is a diagram illustrating an example of operations performed by a parameter setting unit.
FIG. 5 is a diagram illustrating an example of operations performed by the parameter setting unit.
FIG. 6 is a diagram illustrating an example of operations performed by a user of the image processing device.
FIG. 7 is a diagram illustrating a modified example of FIG. 4.
FIG. 8 is a flow diagram illustrating operations of the image processing device.

### DESCRIPTION OF EMBODIMENTS

Hereinafter, embodiments of the present invention will be described with reference to the accompanying drawings. In all the drawings, like elements are referenced by like reference numerals and descriptions thereof will not be repeated.

Meanwhile, in the following description, each component of each device represents a function-based block rather than a hardware-based configuration. Each component of each device is embodied by any combination of hardware and software based on a CPU and a memory of any computer, a program, loaded into the memory, for embodying the components of the drawing, storage media such as a hard disk which stores the program, and an interface for network connection. Embodying methods and devices thereof may be modified in various ways.

### (First Embodiment)

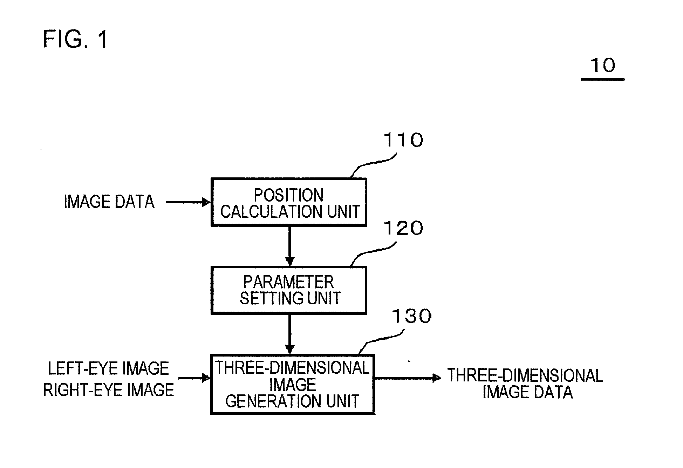

FIG. 1 is a diagram illustrating a functional configuration of an image processing device 10 according to a first embodiment. The image processing device 10 includes a position calculation unit 110, a parameter setting unit 120, and a three-dimensional image generation unit 130. The position calculation unit 110 acquires image data generated by imaging a face of a user. The position calculation unit 110 calculates the position of the face within the image data. The three-dimensional image generation unit 130 generates three-dimensional image data for displaying a three-dimensional image on the basis of a left-eye image, a right-eye image, and a three-dimensional image display parameter. The parameter setting unit 120 sets the above-mentioned parameter on the basis of a calculation value of the position calculation unit 110. Such a parameter is, for example, a shift amount of at least one of the left-eye image and the right-eye image.

According to the present embodiment, a user can set the three-dimensional image display parameter simply by shifting the relative position of a face to an imaging device that generates image data. Therefore, the three-dimensional image display parameter is easily set by a user.

### (Second Embodiment)

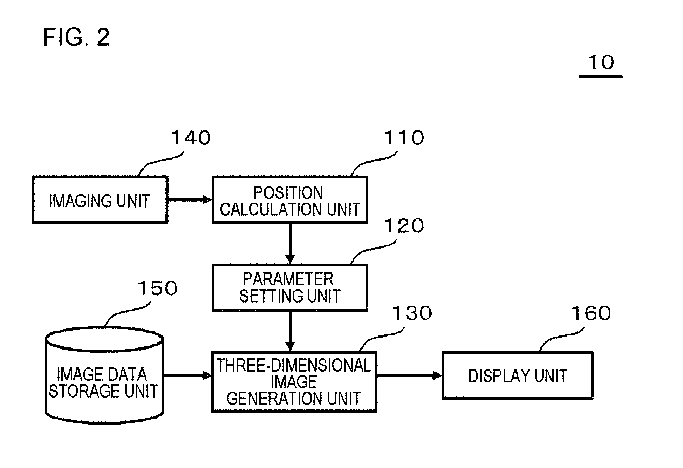

FIG. 2 is a diagram illustrating a functional configuration of an image processing device 10 according to a second embodiment. The image processing device 10 according to the present embodiment has the same configuration as that of the image processing device 10 according to the first embodiment, except that an imaging unit 140, an image data storage unit 150, and a display unit 160 are included therein.

The imaging unit 140 generates image data. The image data storage unit 150 stores a left-eye image and a right-eye image for three-dimensional image display. These images have, for example, a multi-picture format. The image data storage unit 150 may acquire the left-eye image and the right-eye image through a communication unit (not shown), and may acquire the left-eye image and the right-eye image through a recording medium. In addition, the image data storage unit 150 may store a parameter setting value. The display unit 160 displays a three-dimensional image using the three-dimensional image data. The display unit 160 is a display device capable of allowing three-dimensional vision with the naked eye as in, for example, a parallax barrier system, a lenticular system or the like. However, the display unit 160 may be a device that displays a three-dimensional image using an auxiliary device such as eye glasses.

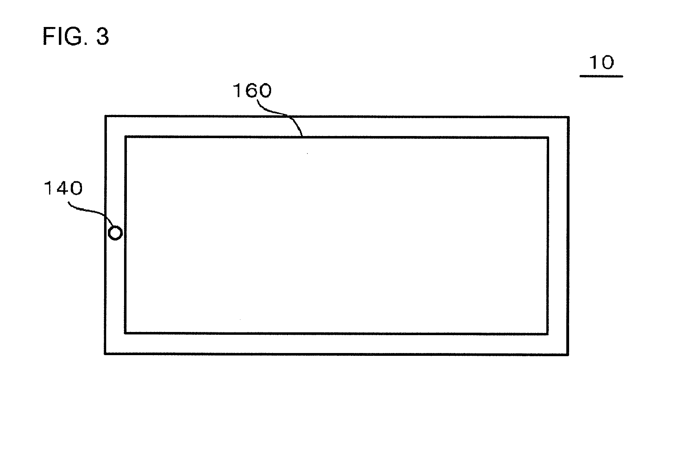

FIG. 3 is a plan view illustrating a layout of the imaging unit 140 and the display unit 160 in the image processing device 10. The image processing device 10 is, for example, a portable electronic device, and may have a communication function. The display unit 160 is provided on one surface of a housing of the image processing device 10. The imaging unit 140 is provided on a surface flush with the display unit 160. Therefore, a user can adjust the three-dimensional image parameter by shifting the relative position of a face to the imaging unit 140 while viewing the three-dimensional image displayed by the display unit 160.

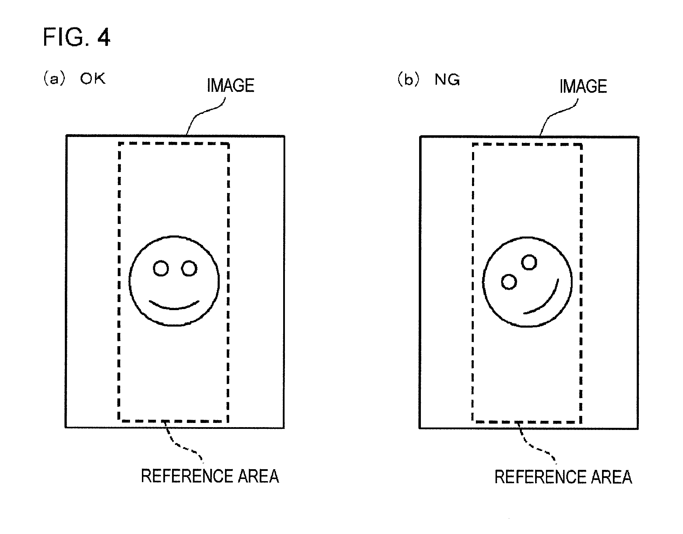

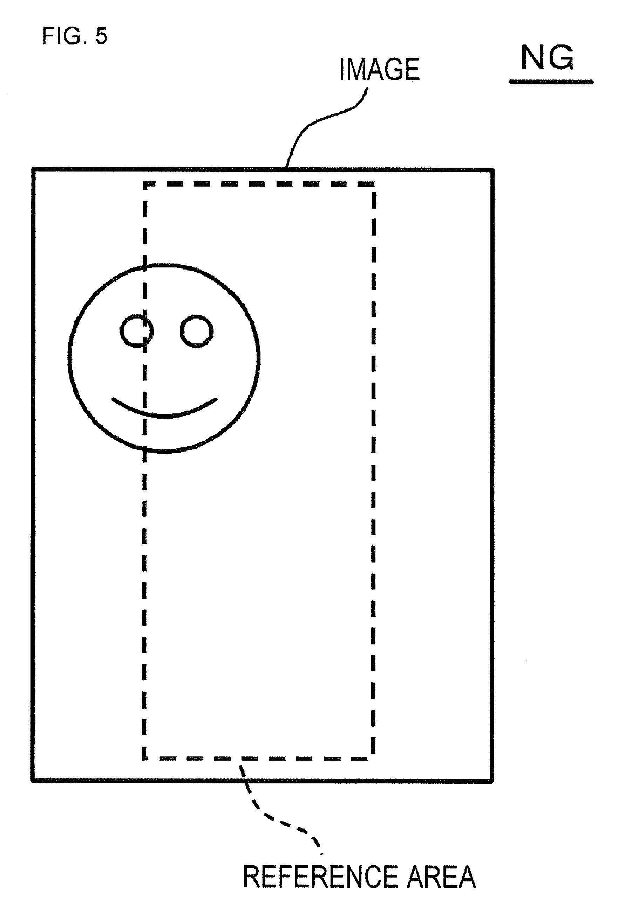

FIGS. 4 and 5 show an example of operations performed by the parameter setting unit 120. In the example shown in the drawing, the parameter setting unit 120 is provided with a reference area within image data. The parameter setting unit 120 performs a parameter setting operation only while the face is included within the reference area.

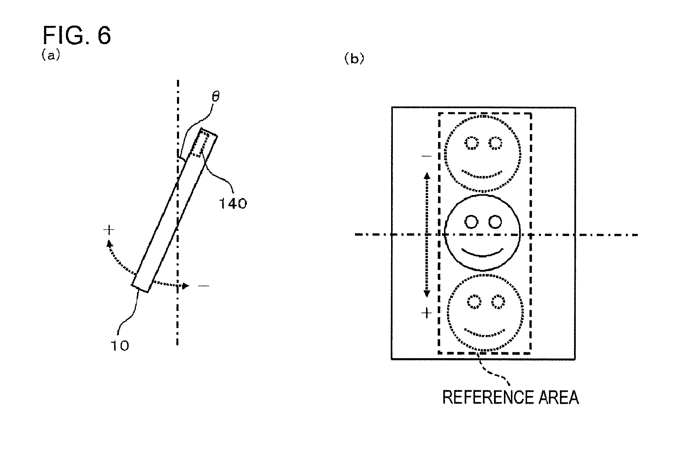

Specifically, when the tilt of the face within the reference area is equal to or less than a reference value as shown in FIG. 4 (a), the parameter setting unit 120 starts parameter setting. In addition, when the tilt of the face is equal to or greater than a reference value even in a case where the face is present in the reference area as shown in FIG. 4 (b), the parameter setting unit 120 does not start the parameter setting. This reason will be described later with reference to FIG. 6.

As shown in FIG. 5, when the face is no longer included in the reference area, the parameter setting unit 120 terminates the parameter setting. This allows the parameter setting to be simply terminated. When a portion of the face having a reference ratio or more deviates from the reference area, the parameter setting unit 120 may terminate the parameter setting.

FIG. 6 shows an example of operations performed by a user of the image processing device 10. In the example shown in the drawing, a user of the image processing device 10 changes the tilt of the image processing device 10, and thus vertically changes the position of the face within the reference area. The parameter setting unit 120 changes a value of the three-dimensional image parameter on the basis of the height of the display position of the face. For example, when the height of the display position of the face becomes higher than a reference position, the parameter setting unit 120 changes a parameter in a + direction from a default value. In addition, when the height of the display position of the face becomes lower than the reference position, the parameter setting unit 120 changes the parameter in a - direction from the default value. This allows operations performed by a user to be simplified. Meanwhile, in such a process, when the parameter value becomes equal to an upper limit or a lower limit, the parameter setting unit 120 may terminate the parameter setting operation.

Meanwhile, it is also considered that a user of the image processing device 10 may change the tilt of the image processing device 10 in a transverse direction to thereby change the position of the face within the reference area from side to side. In this case, when the display position of the face moves further to the right from the reference position, the parameter setting unit 120 changes the parameter in a + (or -) direction from the default value. In addition, when the display position of the face moves further to the left from the reference position, the parameter setting unit 120 changes the parameter in a - (or +) direction from the default value. However, when the display unit 160 displays a three-dimensional image on the basis of the parallax barrier system, the tilting of the image processing device 10 in a transverse direction makes it difficult for a user to visually recognize the three-dimensional image. For this reason, when the display unit 160 is the parallax barrier system, it is preferable that the parameter setting unit 120 change a value of the three-dimensional image parameter on the basis of the height of the display position of the face.

When a process described with reference to FIG. 6 is performed in a state where the face is tilted within the reference area shown in FIG. 4, there is the possibility of a parameter correction direction being different from a user's intention. For this reason, a process described with reference to FIG. 4 is required.

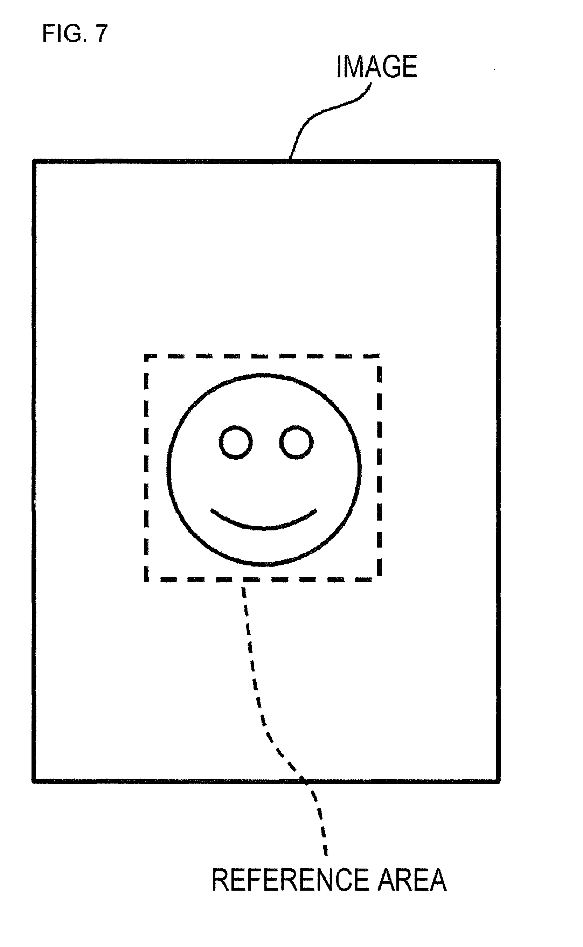

In addition, as shown in FIG. 7, the reference area at the start of the parameter setting described in FIG. 4 may be narrower than the reference area during the parameter setting operation.

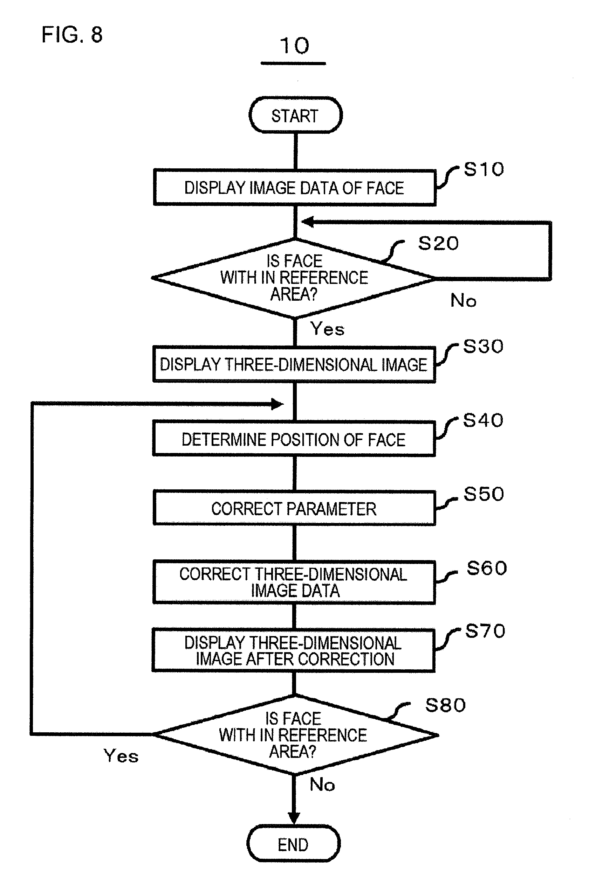

FIG. 8 is a flow diagram illustrating operations of the image processing device 10. First, the three-dimensional image generation unit 130 converts image data captured by the imaging unit 140 into two-dimensional image data and causes the display unit 160 to display the converted data (step S10). A user of the image processing device 10 positions the face within the reference area while viewing the display of the display unit 160 (step S20: Yes). Thereby, a parameter setting process is started.

First, the three-dimensional image generation unit 130 reads out a left-eye image, a right-eye image, and a default parameter value from the image data storage unit 150, and causes the display unit 160 to display a three-dimensional image using the read-out data (step S30). A user tilts the image processing device 10 on the basis of the visibility of the three-dimensional image displayed by the display unit 160. Then, the position of the face within the image data generated by the imaging unit 140 is changed. The parameter setting unit 120 determines the position of the face (step S40), and corrects a three-dimensional image display parameter on the basis of the determination result (step S50). The three-dimensional image generation unit 130 corrects three-dimensional image data using the parameter corrected by the parameter setting unit 120 (step S60). The display unit 160 displays a three-dimensional image using the three-dimensional image data after the correction (step S70).

When the parameter correction is terminated, a user moves the face or the image processing device 10 so that the face deviates from the reference area (step S80: No). Thereby, the parameter setting process is terminated. Meanwhile, the set parameter may be stored in the image data storage unit 150.

As stated above, in the present embodiment, it is also possible to obtain the same effect as that in the first embodiment. In addition, the tilt of the image processing device 10 is changed, and thus the position of the face within the reference area is changed vertically, to thereby change the parameter value. This allows the parameter setting to be further facilitated. In the present embodiment, in order for such setting to be performed normally, the parameter setting process is not performed when the face is tilted within the image data. Therefore, it is possible to suppress a change in parameter in a direction reverse to a user's intention.

In addition, the imaging unit 140 is provided on a surface flush with the display unit 160. Therefore, a user can adjust the three-dimensional image parameter by shifting the relative position of the face to the imaging unit 140 while viewing the three-dimensional image displayed by the display unit 160.

In addition, the parameter setting unit 120 terminates the parameter setting when the face is no longer included in the reference area. This allows the parameter setting to be simply terminated.

As described above, although the embodiments of the present invention have been set forth with reference to the drawings, they are merely illustrative of the invention, and various configurations other than those stated above can be adopted.

Meanwhile, according to the above-mentioned embodiments, the following invention is disclosed.

### (Appendix 1)

An image processing device including:
a position calculation unit that acquires image data generated by imaging a face of a user and calculate a position of the face within the image data;
a three-dimensional image generation unit that generates three-dimensional image data for displaying a three-dimensional image, on the basis of a left-eye image, a right-eye image, and a three-dimensional image display parameter; and
a parameter setting unit that sets the parameter on the basis of a calculation value of the position calculation unit.

### (Appendix 2)

The image processing device according to appendix 1, wherein the parameter is a shift amount of at least one of the left-eye image and the right-eye image.

### (Appendix 3)

The image processing device according to appendix 1 or 2, further including:
an imaging unit, provided on one surface of the image processing device, which generates the image data; and
a display unit, provided on the one surface, which displays the three-dimensional image data.

### (Appendix 4)

The image processing device according to any one of appendices 1 to 3, wherein the parameter setting unit terminates setting of the parameter when the face is no longer included in a reference area within the image data.

### (Appendix 5)

The image processing device according to any one of appendices 1 to 4, wherein the parameter setting unit starts the setting of the parameter when a tilt of the face is equal to or less than a reference value in the image data.

### (Appendix 6)

An image processing method causing a computer to:
acquire image data generated by imaging a face of a user and calculate a position of the face in the image data;
generate three-dimensional image data for displaying a three-dimensional image, on the basis of a left-eye image, a right-eye image, and a three-dimensional image display parameter; and
set the parameter on the basis of the position of the face.

### (Appendix 7)

The image processing method according to appendix 6, wherein the parameter is a shift amount of at least one of the left-eye image and the right-eye image.

### (Appendix 8)

The image processing method according to appendix 6 or 7, wherein the computer terminates setting of the parameter when the face is no longer included in a reference area within the image data.

### (Appendix 9)

The image processing method according to any one of appendices 6 to 8, wherein the computer starts the setting of the parameter when a tilt of the face is equal to or less than a reference value in the image data.

### (Appendix 10)

A program causing a computer to have:
a function of acquiring image data generated by imaging a face of a user and calculating a position of the face in the image data;
a function of generating three-dimensional image data for displaying a three-dimensional image, on the basis of a left-eye image, a right-eye image, and a three-dimensional image display parameter; and
a function of setting the parameter on the basis of the position of the face.

### (Appendix 11)

The program according to appendix 10, wherein the parameter is a shift amount of at least one of the left-eye image and the right-eye image.

### (Appendix 12)

The program according to appendix 10 or 11, further including causing the computer to have a function of terminating the setting of the parameter when the face is no longer included in a reference area within the image data.

### (Appendix 13)

The program according to any one of appendices 10 to 12, further including causing the computer to have a function of starting the setting of the parameter when a tilt of the face is equal to or less than a reference value in the image data.

The application claims priority from Japanese Patent Application No. 2012-64894 filed on March 22, 2012, the content of which is incorporated herein by reference in its entirety.

## Claims

1. An image processing device comprising:
a position calculation unit that acquires image data generated by imaging a face of a user and calculate a position of the face within the image data;
a three-dimensional image generation unit that generates three-dimensional image data for displaying a three-dimensional image, on the basis of a left-eye image, a right-eye image, and a three-dimensional image display parameter; and
a parameter setting unit that sets the parameter on the basis of a calculation value of the position calculation unit.

2. The image processing device according to claim 1, wherein the parameter is a shift amount of at least one of the left-eye image and the right-eye image.

3. The image processing device according to claim 1 or 2, further comprising:
an imaging unit, provided on one surface of the image processing device, which generates the image data; and
a display unit, provided on the one surface, which displays the three-dimensional image data.

4. The image processing device according to any one of claims 1 to 3, wherein the parameter setting unit terminates setting of the parameter when the face is no longer included in a reference area within the image data.

5. The image processing device according to any one of claims 1 to 4, wherein the parameter setting unit starts the setting of the parameter when a tilt of the face is equal to or less than a reference value in the image data.

6. An image processing method causing a computer to:
acquire image data generated by imaging a face of a user and calculate a position of the face in the image data;
generate three-dimensional image data for displaying a three-dimensional image, on the basis of a left-eye image, a right-eye image, and a three-dimensional image display parameter; and
set the parameter on the basis of the position of the face.

7. A program causing a computer to have:
a function of acquiring image data generated by imaging a face of a user and calculating a position of the face in the image data;
a function of generating three-dimensional image data for displaying a three-dimensional image, on the basis of a left-eye image, a right-eye image, and a three-dimensional image display parameter; and
a function of setting the parameter on the basis of the position of the face.
